(19) Europäisches Patentamt
European Patent Office
Office européen des brevets

(11) **EP 3 653 666 A1**

(12) **EUROPEAN PATENT APPLICATION**
published in accordance with Art. 153(4) EPC

(43) Date of publication:
**20.05.2020 Bulletin 2020/21**

(51) Int Cl.:
**C08L 21/00** (2006.01)    **B60C 1/00** (2006.01)
**C08K 3/04** (2006.01)    **C08K 3/36** (2006.01)
**C08L 7/00** (2006.01)

(21) Application number: **18831263.1**

(22) Date of filing: **21.06.2018**

(86) International application number:
**PCT/JP2018/023673**

(87) International publication number:
**WO 2019/012945 (17.01.2019 Gazette 2019/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2017 JP 2017138336**

(71) Applicant: **Bridgestone Corporation Tokyo 104-8340 (JP)**

(72) Inventors:
• **KANATOMI, Yoshihiko**
  **Tokyo 104-8340 (JP)**
• **MUSHA, Shinichi**
  **Tokyo 104-8340 (JP)**
• **HAMATANI, Satoshi**
  **Tokyo 104-8340 (JP)**

(74) Representative: **Oxley, Robin John George Marks & Clerk LLP 15 Fetter Lane London EC4A 1BW (GB)**

(54) **RUBBER COMPOSITION AND TIRE**

(57) Provided is a rubber composition capable of providing a vulcanized rubber excellent in fracture resistance, crack resistance, and low heat generation property. The rubber composition comprises a rubber component (A), a carbon black (B) having a CTAB specific surface area of 30-110 m2/g and a silica (C) having a CTAB specific surface area of 200 m2/g or larger. The total amount of the amount (b) of the carbon black (B) and the amount (c) of the silica (C) is 30-80 parts by mass relative to 100 parts by mass of the rubber component (A), and (b):(c) = (70-85):(30-15).

EP 3 653 666 A1

## Description

Technical Field

The present invention relates to a rubber composition and a tire.

Background Art

In recent years, a tire having a small rolling resistance is being demanded for saving the fuel consumption amount of automobiles under the social demands of energy saving and resource saving. The known methods for decreasing the rolling resistance of tires for addressing the demands include a method of using a rubber composition having a hysteresis loss reduced by decreasing the amount of carbon black used, using lower carbon black, or the like, i.e., a rubber composition having a low heat generation property, in a tire member, particularly tread rubber.

By using carbon black having low reinforcing capability or reducing the amount of the carbon black mixed, a tire having a small rolling resistance can be achieved.

For example, as a rubber composition for obtaining a tire for two-wheeled vehicle having both wet grip performance and chunking resistance performance, a rubber composition for tread for a tire for two-wheeled vehicle is disclosed wherein the rubber composition contains a rubber component, silica, and carbon black, wherein the rubber component contains a natural rubber and a styrene-butadiene rubber and/or a butadiene rubber, the silica has a CTAB specific surface area of 180 m$^2$/g or more and a BET specific surface area of 185 m$^2$/g or more, and the amount of the carbon black contained is 15 parts by mass or more, relative to 100 parts by mass of the rubber component (see PTL 1).

Citation List

Patent Literature

PTL 1: JP 2011-174048 A

Summary of Invention

Technical Problem

By using carbon black in the rubber composition, a tire strength, such as a fracture resistance or a crack resistance, can be improved. However, a problem occurs in that the rubber composition having carbon black mixed in an increased amount becomes poor in low heat generation property. As a method for solving the problem, the use of carbon black and silica in combination has been known to be able to achieve both the low heat generation property and tire strength to some extent, but this method has a limitation.

In view of the circumstances, an object of the present invention is to provide a rubber composition that is capable of providing vulcanized rubber excellent in the fracture resistance, crack resistance, and low heat generation property, and to provide a tire that is excellent in the fracture resistance, crack resistance, and low hysteresis loss.

Solution to Problem

<1> A rubber composition comprising: (A) a rubber component; (B) a carbon black having a cetyltrimethylammonium bromide specific surface area of 30 to 110 m$^2$/g; and (C) a silica having a cetyltrimethylammonium bromide specific surface area of 200 m$^2$/g or more, having a total amount of the carbon black (B) and the silica (C) of 30 to 80 parts by mass per 100 parts by mass of the rubber component (A), and having a ratio (b)/(c) of a content (b) of the carbon black (B) and a content (c) of the silica (C) of (70 to 85)/(30 to 15).

<2> The rubber composition according to the item <1>, wherein the rubber component (A) contains natural rubber.

<3> The rubber composition according to the item <1> or <2>, wherein the silica (C) has a cetyltrimethylammonium bromide specific surface area of 210 m$^2$/g or more.

<4> A tire including the rubber composition according to any one of the items <1> to <3>.

Advantageous Effects of Invention

According to the present invention, a rubber composition that is capable of providing vulcanized rubber excellent in the fracture resistance, crack resistance, and low heat generation property, and a tire that is excellent in the fracture resistance, crack resistance, and low hysteresis loss can be obtained.

Description of Embodiments

<Rubber Composition>

The rubber composition of the present invention comprising: (A) a rubber component; (B) a carbon black having a cetyltrimethylammonium bromide specific surface area of 30 to 110 $m^2/g$; and (C) a silica having a cetyltrimethylammonium bromide specific surface area (CTAB) of 200 $m^2/g$ or more, has a total amount of the carbon black (B) and the silica (C) of 30 to 80 parts by mass per 100 parts by mass of the rubber component (A), and has a ratio (b)/(c) of a content (b) of the carbon black (B) and a content (c) of the silica (C) of (70 to 85)/(30 to 15).

In the following description, the "cetyltrimethylammonium bromide specific surface area" may be abbreviated to "CTAB specific surface area" or simply "CTAB".

As mentioned above, it has been known that the rubber composition containing both carbon black and silica is improved in the low heat generation property, fracture resistance, and crack resistance to some extent. In such a case, when using silica having a fine particle diameter with a CTAB specific surface area of 200 $m^2/g$ or more, the silica is likely to suffer aggregation, causing the vulcanized rubber to have poor low heat generation property.

However, in the present invention, it has been found that, even when using the silica having a fine particle diameter with a CTAB specific surface area of 200 $m^2/g$ or more, the rubber composition having the aforementioned features can provide vulcanized rubber excellent in the fracture resistance, crack resistance, and low heat generation property. The mechanism therefor is not completely clear, but can be considered as follows.

The heat generation of vulcanized rubber occurs generally through the friction of the filler, such as carbon black and silica, contained in the vulcanized rubber, and accordingly there is a tendency of deterioration of the low heat generation property under the environment where silica is likely to suffer aggregation, as described above.

In the present invention, it is considered that the rubber composition having the aforementioned features for the carbon black (B) and silica (C) exerts such an effect that the silica having a fine particle diameter enters the voids among the carbon black (B), and the rubber strongly interacts with the carbon black and the silica in the region of fracture, such as fracture and cracking, of the vulcanized rubber, resulting in the enhancement of the fracture resistance and the crack resistance, while retaining the state of the low heat generation property without affecting the aggregation among particles.

The rubber composition and the tire of the present invention will be described in detail below.

[Rubber Component (A)]

The rubber composition of the present invention contains a rubber component (A).

Examples of the rubber component include at least one kind of diene rubber selected from the group consisting of natural rubber (NR) and synthetic diene rubber.

Specific examples of the synthetic diene rubber include polyisoprene rubber (IR), polybutadiene rubber (BR), styrene-butadiene copolymer rubber (SBR), butadiene-isoprene copolymer rubber (BIR), styrene-isoprene copolymer rubber (SIR), and styrene-butadiene-isoprene copolymer rubber (SBIR).

The diene rubber is preferably natural rubber, polyisoprene rubber, styrene-butadiene copolymer rubber, polybutadiene rubber, and isobutylene isoprene rubber, more preferably natural rubber and polybutadiene rubber. The diene rubber may be used alone, or two or more kinds thereof may be mixed.

The rubber component may contain any one of natural rubber and synthetic diene rubber, or may contain both of them, and the rubber component preferably contains at least natural rubber from the standpoint of the enhancement of the fracture resistance, the crack resistance, and the low heat generation property, and natural rubber and synthetic diene rubber are more preferably used in combination.

The proportion of the natural rubber in the rubber component is preferably 60% by mass or more, more preferably 70% by mass or more, from the standpoint of the further enhancement of the fracture resistance and the crack resistance. Further, from the standpoint of the enhancement of the low heat generation property, the proportion of the natural rubber in the rubber component is preferably 95% by mass or less, more preferably 85% by mass or less.

The rubber component may contain non-diene rubber up to a limit that does not impair the effects of the present invention.

[Carbon Black (B)]

The rubber composition of the present invention contains (B) carbon black having a cetyltrimethylammonium bromide specific surface area of 30 to 110 m$^2$/g, has a total amount of the carbon black (B) and the silica (C) of 30 to 80 parts by mass per 100 parts by mass of the rubber component (A), and has a ratio (b)/(c) of a content (b) of the carbon black (B) and a content (c) of the silica (C) of (70 to 85)/(30 to 15).

In the case where the CTAB specific surface area of the carbon black is less than 30 m$^2$/g, the excellent fracture resistance and crack resistance cannot be obtained, and in the case where the CTAB specific surface area thereof exceeds 110 m$^2$/g, the excellent low heat generation property cannot be obtained. The CTAB specific surface area of the carbon black is preferably 50 m$^2$/g or more, more preferably 70 m$^2$/g or more, from the standpoint of the further enhancement of the fracture resistance and crack resistance. The CTAB specific surface area of the carbon black is preferably 100 m$^2$/g or less, more preferably 90 m$^2$/g or less, from the standpoint of the further enhancement of the low heat generation property.

The CTAB specific surface area of the carbon black may be measured by a method according to JIS K 6217-3:2001 (Determination of specific surface area - CTAB adsorption method).

The kind of the carbon black is not particularly limited, as far as the CTAB specific surface area is in the aforementioned range, and examples thereof include GPF, FEF, HAF, ISAF, and SAF.

The carbon black preferably has a nitrogen adsorption specific surface area (N$_2$SA) of 70 m$^2$/g or more. When the carbon black has an N$_2$SA of 70 m$^2$/g or more, the fracture resistance and crack resistance of the crosslinked rubber and tire can be further improved. The carbon black preferably has an N$_2$SA of 140 m$^2$/g or less. When the carbon black has an N$_2$SA of 140 m$^2$/g or less, excellent dispersibility of the carbon black in the rubber composition can be obtained.

The N$_2$SA of the carbon black is determined by JIS K 6217-2:2001 (Determination of specific surface area - Nitrogen adsorption method - Single point method) A method.

The carbon black preferably has a dibutyl phthalate oil absorption number (DBP oil absorption number) of 70 ml/100 g or more. When the carbon black has a DBP oil absorption number of 70 ml/100 g or more, the fracture resistance and crack resistance of the crosslinked rubber and tire can be further improved. The carbon black preferably has a DBP oil absorption number of 140 ml/100 g or less from the viewpoint of the processability of the rubber composition.

The DBP oil absorption number of the carbon black is determined by JIS K 6217-4:2001 (Determination of oil absorption number).

The carbon black (B) is contained in the rubber composition in such an amount that the total amount (d) of the content (b) of the carbon black (B) and the content (c) of the silica (C) is 30 to 80 parts by mass per 100 parts by mass of the rubber component (A) and the ratio (b)/(c) of the content (b) of the carbon black (B) and the content (c) of the silica (C) is (70 to 85)/(30 to 15).

In the case where the total amount (d) is less than 30 parts by mass per 100 parts by mass of the rubber component (A), the fracture resistance and the crack resistance of the crosslinked rubber and the tire cannot be obtained, and in the case where the total amount (d) exceeds 80 parts by mass, the excellent low heat generation property of the crosslinked rubber cannot be obtained, and the excellent low hysteresis loss of the tire cannot be obtained.

The total amount (d) is preferably 50 parts by mass or more, and more preferably 55 parts by mass or more, per 100 parts by mass of the rubber component (A), from the standpoint of the further enhancement of the fracture resistance of the crosslinked rubber and the tire. The total amount (d) is preferably 70 parts by mass or less, and more preferably 60 parts by mass or less, per 100 parts by mass of the rubber component (A), from the standpoint of the further enhancement of the low heat generation property of the crosslinked rubber and the low hysteresis loss of the tire.

[Silica (C)]

The rubber composition of the present invention contains (C) silica having a cetyltrimethylammonium bromide specific surface area of 200 m$^2$/g or more.

In the case where the CTAB specific surface area of the silica (C) is less than 200 m$^2$/g, the excellent fracture resistance and the excellent crack resistance of the vulcanized rubber and the tire cannot be obtained. The upper limit of the CTAB specific surface area of the silica (C) is not particularly limited, but a product having a CTAB specific surface area exceeding 300 m$^2$/g is not currently available.

The CTAB specific surface area of the silica (C) is preferably 210 m$^2$/g or more, from the standpoint of the further enhancement of the fracture resistance and the crack resistance of the vulcanized rubber and the tire.

The CTAB specific surface area of the silica (C) may be measured by a method according to the method of ASTM-D3765-80.

The silica (C) is not particularly limited, as far as the CTAB specific surface area thereof is 200 m$^2$/g or more, and examples thereof include wet method silica (hydrated silica), dry method silica (anhydrous silica), and colloidal silica.

The silica having a CTAB specific surface area of 200 m$^2$/g or more may be a commercially available product, which may be available, for example, as Zeosil Premium200MP (a trade name), produced by Rhodia S.A.

The silica (C) is contained in the rubber composition in such a range that the total amount (d) of the content (b) of the carbon black (B) and the content (c) of the silica (C) is 30 to 80 parts by mass per 100 parts by mass of the rubber component (A) and the ratio (b)/(c) of the content (b) of the carbon black (B) and the content (c) of the silica (C) is (70 to 85)/(30 to 15).

In the present invention, the ratio (b)/(c) of the content (b) of the carbon black (B) and the content (c) of the silica (C) in the rubber composition is (70 to 85)/(30 to 15). The range means that the content ratio of the silica (C) in the total amount (d) of the content (b) of the carbon black (B) and the content (c) of the silica (C) is 15 to 30% by mass.

In the case where the content ratio of the silica (C) in the total amount (d) is less than 15% by mass, excellent crack resistance cannot be obtained, and in the case where the content ratio thereof exceeds 30% by mass, excellent low heat generation property cannot be obtained.

The ratio of the CTAB specific surface area of the silica (silica CTAB) to the CTAB specific surface area of the carbon black (carbon black CTAB) (silica CTAB/carbon black CTAB) is preferably 1.8 to 2.5 from the standpoint of the further enhancement of the fracture resistance and crack resistance of the vulcanized rubber and the tire, and the (silica CTAB/carbon black CTAB) ratio is preferably in the range of more than 2.5 to 6.7 from the standpoint of the further enhancement of the low heat generation property of the vulcanized rubber and the low hysteresis loss of the tire.

[Silane Coupling Agent]

The rubber composition of the present invention contains the silica even in a small amount, and therefore the rubber composition of the present invention desirably contains a silane coupling agent for the enhancement of the dispersibility of the silica and the enhancement of the reinforcing capability by strengthening the bond between the silica and the rubber component.

The content of the silane coupling agent in the rubber composition of the present invention is preferably 5 to 15% by mass or less based on the content of the silica. In the case where the content of the silane coupling agent is 15% by mass or less based on the content of the silica, the effect of improving the reinforcing capability for the rubber component and the dispersibility can be obtained, and the economical efficiency may not be impaired. In the case where the content of the silane coupling agent is 5% by mass or more based on the content of the silica, the dispersibility of the silica in the rubber composition can be enhanced.

The silane coupling agent is not particularly limited, and preferred examples thereof include bis(3-triethoxysilylpropyl) disulfide, bis(3-triethoxysilylpropyl) trisulfide, bis(3-triethoxysilylpropyl) tetrasulfide, bis(3-trimethoxysilylpropyl) disulfide, bis(3-trimethoxysilylpropyl) trisulfide, bis(3-trimethoxysilylpropyl) tetrasulfide, bis(2-triethoxysilylethyl) disulfide, bis(2-triethoxysilylethyl) trisulfide, bis(2-triethoxysilylethyl) tetrasulfide, 3-trimethoxysilylpropyl benzothiazolyl disulfide, 3-trimethoxysilylpropyl benzothiazolyl trisulfide, and 3-trimethoxysilylpropyl benzothiazolyl tetrasulfide.

The rubber composition of the present invention may contain a filler other than the carbon black and the silica, and examples of the filler include a metal oxide, such as alumina and titania.

(Additional Components)

The rubber composition of the present invention may contain additional components that are generally used in the field of rubber industries, such as a vulcanizing agent, a vulcanization accelerator, zinc oxide, stearic acid, and an anti-aging agent, in such a range that does not impair the object of the present invention, in addition to the rubber component (A), the carbon black (B), and the silica (C) and the silane coupling agent optionally contained. The additional components used are preferably commercially available products. The rubber composition may be prepared in such a manner that the rubber component, the carbon black (B), the silica (C), and the additional components appropriately selected are mixed and kneaded with a closed kneading device, such as a Banbury mixer, an internal mixer, and an intensive mixer, or a non-closed kneading device, such as rolls, and then subjected to heating, extrusion, and the like.

<Vulcanized Rubber and Tire>

The vulcanized rubber of the present invention is rubber obtained by vulcanizing the rubber composition of the present invention, and is excellent in the fracture resistance, crack resistance, and low heat generation property. Accordingly, the vulcanized rubber of the present invention can be applied to various rubber products, such as a tire, antivibration rubber, seismic isolation rubber, a belt, such as a conveyer belt, a rubber crawler, and various kinds of hoses.

For example, in the case where the vulcanized rubber of the present invention is applied to a tire, the structure of the tire is not particularly limited, as far as the rubber composition of the present invention is used, and may be appropriately selected depending on the purpose. The tire is excellent in the fracture resistance, crack resistance, and low hysteresis loss.

The portion in the tire, to which the rubber composition of the present invention is applied, is not particularly limited, and may be appropriately selected depending on the purpose, and examples thereof include a tire case, a tread, a base tread, a side wall, side reinforcing rubber, and a bead filler.

The method for producing the tire may be an ordinary method. For example, the members that are generally used for producing a tire, such as a carcass layer, a belt layer, and a tread layer, each of which is formed of the rubber composition of the present invention and a cord, are adhered sequentially on a tire molding drum, and the drum is withdrawn to form a green tire. Subsequently, the green tire is vulcanized by heating by an ordinary method to produce the target tire (for example, a pneumatic tire).

Examples

The present invention will be described in more detail with reference to examples below, but the present invention is not limited to the examples below.

<Preparation of Rubber Composition>

Rubber compositions having the formulations shown in Tables 1 to 6 were prepared according to an ordinary method by using the rubber component, carbon black, and silica shown in Tables 2 to 6 and the components shown in Table 1.

[Details of the components shown in Tables 2 to 6]

(Rubber component)

NR: natural rubber, RSS#1
BR: polybutadiene rubber, "BR01", a trade name, produced by JSR Corporation

(Carbon black)

CB-1: "Asahi #15", a trade name, produced by Asahi Carbon Co., Ltd. (CTAB: 20 m$^2$/g; DBP oil absorption number: 12 ml/100 g; $N_2SA$: 41 m$^2$/g)
CB-2: "Asahi #55", a trade name, produced by Asahi Carbon Co., Ltd. (CTAB: 31 m$^2$/g; DBP oil absorption number: 26 ml/100 g; $N_2SA$: 87 m$^2$/g)
CB-3: "Asahi #65", a trade name, produced by Asahi Carbon Co., Ltd. (CTAB: 70 m$^2$/g; DBP oil absorption number: 42 ml/100 g; $N_2SA$: 120 m$^2$/g)
CB-4: "Asahi #70", a trade name, produced by Asahi Carbon Co., Ltd. (CTAB: 83 m$^2$/g; DBP oil absorption number: 77 ml/100 g; $N_2SA$: 101 m$^2$/g)
CB-5: "Asahi #80", a trade name, produced by Asahi Carbon Co., Ltd. (CTAB: 100 m$^2$/g; DBP oil absorption number: 115 ml/100 g; $N_2SA$: 113 m$^2$/g)
CB-6: "Asahi #78", a trade name, produced by Asahi Carbon Co., Ltd. (CTAB: 122 m$^2$/g; DBP oil absorption number: 124 ml/100 g; $N_2SA$: 125 m$^2$/g)

(Silica)

Silica-1: "Nipsil AQ", a trade name, produced by Nippon Silica Industries, Ltd. (CTAB: 150 m$^2$/g)
Silica-2: "zeosil HRS 1200", a trade name, Rohdia (CTAB: 200 m$^2$/g)
Silica-3: "9500GR", a trade name, produced by Evonik Industries AG (CTAB: 220 m$^2$/g)
Silica-4: Silica having a CTAB specific surface area of 230 m$^2$/g produced by the following production method

[Production Method of Silica-4]

12 L of a sodium silicate solution having a concentration of 10 g/L ($SiO_2/Na_2O$ mass ratio: 3.5) was introduced to a 25 L stainless steel reactor. The solution was heated to 80°C. All the reactions were performed at this temperature. Sulfuric acid having a concentration of 80 g/L was introduced under stirring (300 rpm, propeller stirrer) until the pH reached 8.9.
A sodium silicate solution having a concentration of 230 g/L (having an $SiO_2/Na_2O$ mass ratio of 3.5) was introduced to the reactor at a rate of 76 g/min, and simultaneously, sulfuric acid having a concentration of 80 g/L was introduced to the reactor at a rate set to retain the pH of the reaction mixture to 8.9, both over 15 minutes. As a result, a sol of particles that were eventually aggregated was obtained. The sol was recovered and rapidly cooled with a copper coil having cold water circulated therein. The reactor was promptly cleaned.

4 L of pure water was introduced to the 25 L reactor. Sulfuric acid having a concentration of 80 g/L was introduced until the pH reached 4. Simultaneous addition of the cooled sol at a flow rate of 195 g/min and sulfuric acid (having a concentration of 80 g/L) at a flow rate capable of setting the pH to 4 was performed over 40 minutes. A ripening process continuing for 10 minutes was performed.

After the elapse of 40 minutes from the simultaneous addition of sol and sulfuric acid, simultaneous addition of sodium silicate (which was the same as sodium silicate in the first simultaneous addition) at a flow rate of 76 g/min and sulfuric acid (80 g/L) at a flow rate set to retain the pH of the reaction mixture to 4 was performed over 20 minutes. After the elapse of 20 minutes, the flow of the acid was terminated until the pH reached 8.

Another simultaneous addition of sodium silicate (which was the same as sodium silicate in the first simultaneous addition) at a flow rate of 76 g/min and sulfuric acid (having a concentration of 80 g/L) at a flow rate set to retain the pH of the reaction mixture to 8 was performed over 60 minutes. The stirring rate was increased when the mixture became very viscous.

After the simultaneous addition, the pH of the reaction mixture was set to 4 with sulfuric acid having a concentration of 80 g/L over 5 minutes. The mixture was ripened at pH 4 for 10 minutes.

The slurry was filtered and washed under reduced pressure (cake solid content: 15%), and after dilution, the resulting cake was mechanically pulverized. The resulting slurry was spray-dried with a turbine spray dryer to provide the silica-4.

[Details of the components shown in Table 1]

The details of the components shown in Table 1, except the rubber component, carbon black, and silica, are as follows.

Silane coupling agent: ABC-856, produced by Shin-Etsu Chemical Co., Ltd.

Sulfur: "Powder Sulfur", a trade name, produced by Tsurumi Chemical Industry Co., Ltd.

Vulcanization accelerator: N-cyclohexyl-2-benzothiazolylsulfenamide, "Nocceler CZ-G", a trade name, produced by Ouchi Shinko Chemical Industrial Co., Ltd.

Stearic acid: "Stearic Acid 50S", a trade name, produced by New Japan Chemical Co., Ltd.

Zinc oxide: "No. 3 Zinc Oxide", a trade name, produced by Hakusui Tech Co., Ltd

Anti-aging agent: N-phenyl-N'-(1,3-dimethylbutyl)-p-phenylenediamine, "Nocrac 6C", a trade name, produced by Ouchi Shinko Chemical Industrial Co., Ltd.

<Production and Evaluation of Tire>

A tire (size: 195/65R15) was experimentally produced by using the prepared rubber composition as tire case rubber, and the vulcanized rubber was cut out from the experimental tire, and the vulcanized rubber was evaluated for the fracture resistance, crack resistance, and low heat generation property. The results are shown in Tables 2 to 6.

(1) Fracture Resistance

A No. 3 dumbbell-shaped test specimen was prepared from the vulcanized rubber, and, in accordance with JIS K6251:2010, a tensile test was conducted at 100°C with respect to the prepared specimen to measure a tensile strength at fracture. The results are shown as indices based on the result of Comparative Example 1 as 100. A larger index means better fracture resistance.

(2) Crack Resistance

A test specimen of a JIS No. 3 shape was prepared from the vulcanized rubber, and a crack of 0.5 mm was formed in the specimen at its center portion, and a cycle of flexing fatigue and tension fatigue was repeatedly applied to the specimen at a constant strain of 0 to 100% at room temperature, and the number of cycles until the specimen broke was measured. The results are shown as indices based on the result of Comparative Example 1 as 100. A larger index means better crack resistance.

(3) Low Heat Generation Property

The vulcanized rubber was measured for the $\tan\delta$ at a temperature of 60°C, a strain of 5%, and a frequency of 15 Hz with a viscoelasticity measurement device (produced by Rheometric Scientific Company). The results are shown as indices based on the tanδ of Comparative Example 1 as 100 according to the following expression. A larger heat generation property index means a small hysteresis loss with better low heat generation property.

$$(\text{Heat generation property index}) = (\tan\delta \text{ of vulcanized rubber of Comparative Example 1}/\tan\delta \text{ of each vulcanized rubber}) \times 100$$

Table 1

| Formulation of rubber composition | |
|---|---|
| Rubber component | Types and amounts shown in Tables 2 to 6 (Parts by mass) |
| Carbon black | Types and amounts shown in Tables 2 to 6 (Parts by mass) |
| Silica | Types and amounts shown in Tables 2 to 6 (Parts by mass) |
| Silane coupling agent | 0.5 Part by mass |
| Sulfur | 1.1 Parts by mass |
| Vulcanization accelerator | 1.5 Parts by mass |
| Stearic acid | 2.0 Parts by mass |
| Zinc oxide | 3.5 Parts by mass |
| Anti-aging agent | 2.0 Parts by mass |

Table 2

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Rubber component | NR | | part | 80 | 80 | 80 | 80 | 80 | 80 | 80 |
| | BR | | part | 20 | 20 | 20 | 20 | 20 | 20 | 20 |
| Carbon black | CB-1 | CTAB: 20 | part | - | 40 | - | - | - | - | 40 |
| | CB-2 | CTAB: 31 | part | - | - | - | 40 | - | - | - |
| | CB-3 | CTAB: 70 | part | 40 | - | - | - | - | - | - |
| | CB-4 | CTAB: 83 | part | - | - | - | - | 40 | - | - |
| | CB-5 | CTAB: 100 | part | - | - | - | - | - | 40 | - |
| | CB-6 | CTAB: 122 | part | - | - | 40 | - | - | - | - |
| Silica | Silica-1 | CTAB: 150 | part | 15 | 15 | 15 | 15 | 15 | 15 | 20 |
| | Silica-2 | CTAB: 200 | part | - | - | - | - | - | - | - |
| | Silica-3 | CTAB: 220 | part | - | - | - | - | - | - | - |
| | Silica-4 | CTAB: 230 | part | - | - | - | - | - | - | - |
| Total amount (d) of carbon black and silica | | | part | 55 | 55 | 55 | 55 | 55 | 55 | 60 |
| Silica ratio in total amount (d) | | | % | 27.3 | 27.3 | 27.3 | 27.3 | 27.3 | 27.3 | 33.3 |

(continued)

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Evaluation results | Fracture resistance (index) | - | 100 | 85 | 130 | 90 | 110 | 120 | 87 |
| | Crack resistance (index) | - | 100 | 85 | 130 | 90 | 110 | 120 | 87 |
| | Low heat generation property (index) | - | 100 | 130 | 80 | 110 | 95 | 90 | 129 |

Table 3

| | | | | Comparative Example 8 | Comparative Example 9 | Comparative Example 10 | Example 1 | Example 2 | Example 3 | Example 4 |
|---|---|---|---|---|---|---|---|---|---|---|
| Rubber component | NR | | part | 80 | 80 | 80 | 80 | 80 | 80 | 80 |
| | BR | | part | 20 | 20 | 20 | 20 | 20 | 20 | 20 |
| Carbon black | CB-1 | CTAB:20 | part | - | - | - | - | - | - | - |
| | CB-2 | CTAB:31 | part | - | 40 | 50 | 40 | 40 | 40 | - |
| | CB-3 | CTAB:70 | part | - | - | - | - | - | - | 40 |
| | CB-4 | CTAB:83 | part | - | - | - | - | - | - | - |
| | CB-5 | CTAB: 100 | part | - | - | - | - | - | - | - |
| | CB-6 | CTAB: 122 | part | 40 | - | - | - | - | - | - |
| Silica | Silica-1 | CTAB: 150 | part | 20 | - | - | - | - | - | - |
| | Silica-2 | CTAB: 200 | part | - | 20 | 8 | 15 | - | - | 15 |
| | Silica-3 | CTAB: 220 | part | - | - | - | - | 15 | - | - |
| | Silica-4 | CTAB: 230 | part | - | - | - | - | - | 15 | - |
| Total amount (d) of carbon black and silica | | | part | 60 | 60 | 58 | 55 | 55 | 55 | 55 |
| Silica ratio in total amount (d) | | | % | 33.3 | 33.3 | 13.8 | 27.3 | 27.3 | 27.3 | 27.3 |
| Evaluation results | Fracture resistance (index) | | - | 131 | 100 | 101 | 101 | 101 | 101 | 105 |
| | Crack resistance (index) | | - | 131 | 100 | 94 | 101 | 102 | 103 | 105 |
| | Low heat generation property (index) | | - | 78 | 100 | 103 | 120 | 120 | 120 | 110 |

Table 4

| | | | Example 5 | Example 6 | Example 7 | Example 8 | Example 9 | Example 10 | Comparative Example 11 |
|---|---|---|---|---|---|---|---|---|---|
| Rubber component | NR | part | 80 | 80 | 80 | 80 | 80 | 80 | 80 |
| | BR | part | 20 | 20 | 20 | 20 | 20 | 20 | 20 |
| Carbon black | CB-1 | CTAB:20 | part | - | - | - | - | - | - | - |
| | CB-2 | CTAB:31 | part | - | - | - | - | - | - | - |
| | CB-3 | CTAB:70 | part | 40 | 40 | 40 | 45 | 50 | 45 | 50 |
| | CB-4 | CTAB:83 | part | - | - | - | - | - | - | - |
| | CB-5 | CTAB:100 | part | - | - | - | - | - | - | - |
| | CB-6 | CTAB:122 | part | - | - | - | - | - | - | - |
| Silica | Silica-1 | CTAB:150 | part | - | - | - | - | - | - | - |
| | Silica-2 | CTAB:200 | part | - | - | - | - | - | - | - |
| | Silica - 3 | CTAB:220 | part | 15 | - | - | - | - | - | - |
| | Silica-4 | CTAB:230 | part | - | 15 | 10 | 10 | 10 | 8 | 8 |
| Total amount (d) of carbon black and silica | | part | 55 | 55 | 50 | 55 | 60 | 53 | 58 |
| Silica ratio in total amount (d) | | % | 27.3 | 27.3 | 20.0 | 18.2 | 16.7 | 15.1 | 13.8 |
| Evaluation results | Fracture resistance (index) | - | 105 | 105 | 103 | 108 | 113 | 110 | 109 |
| | Crack resistance (index) | - | 106 | 107 | 104 | 105 | 105 | 101 | 98 |
| | Low heat generation property (index) | - | 110 | 110 | 113 | 108 | 103 | 114 | 103 |

EP 3 653 666 A1

Table 5

| | | | | Example 11 | Example 12 | Example 13 | Example 14 | Example 15 | Example 16 | Example 17 |
|---|---|---|---|---|---|---|---|---|---|---|
| Rubber component | NR | | part | 80 | 80 | 80 | 80 | 80 | 80 | 80 |
| | BR | | part | 20 | 20 | 20 | 20 | 20 | 20 | 20 |
| Carbon black | CB-1 | CTAB:20 | part | - | - | - | - | - | - | - |
| | CB-2 | CTAB:31 | part | - | - | - | - | - | - | - |
| | CB-3 | CTAB:70 | part | 55 | 60 | 35 | - | - | - | - |
| | CB-4 | CTAB:83 | part | - | - | - | 40 | 40 | 40 | - |
| | CB-5 | CTAB:100 | part | - | - | - | - | - | - | 40 |
| | CB-6 | CTAB:122 | part | - | - | - | - | - | - | - |
| Silica | Silica-1 | CTAB:150 | part | - | - | - | - | - | - | - |
| | Silica-2 | CTAB:200 | part | - | - | - | 15 | - | - | 15 |
| | Silica-3 | CTAB:220 | part | - | - | - | - | 15 | - | - |
| | Silica-4 | CTAB:230 | part | 10 | 11 | 15 | - | - | 15 | - |
| Total amount (d) of carbon black and silica | | | part | 65 | 71 | 50 | 55 | 55 | 55 | 55 |
| Silica ratio in total amount (d) | | | % | 15.4 | 15.5 | 30.0 | 27.3 | 27.3 | 27.3 | 27.3 |
| Evaluation results | Fracture resistance (index) | | - | 118 | 123 | 101 | 115 | 115 | 115 | 125 |
| | Crack resistance (index) | | - | 107 | 108 | 101 | 115 | 115 | 115 | 125 |
| | Low heat generation property (index) | | - | 101 | 101 | 115 | 105 | 105 | 105 | 102 |

Table 6

| | | | | Comparative Example 12 | Comparative Example 13 | Example 18 | Example 19 | Example 20 | Example 21 | Example 22 |
|---|---|---|---|---|---|---|---|---|---|---|
| Rubber component | NR | | part | 80 | 80 | 80 | 80 | 90 | 70 | 60 |
| | BR | | part | 20 | 20 | 20 | 20 | 10 | 30 | 40 |
| Carbon black | CB-1 | CTAB:20 | part | 40 | - | - | - | - | - | - |
| | CB-2 | CTAB:31 | part | - | - | - | - | - | - | - |
| | CB-3 | CTAB:70 | part | - | - | - | - | 40 | 40 | 40 |
| | CB-4 | CTAB:83 | part | - | - | - | - | - | - | - |
| | CB-5 | CTAB: 100 | part | - | - | 40 | 40 | - | - | - |
| | CB-6 | CTAB: 122 | part | - | 40 | - | - | - | - | - |
| Silica | Silica-1 | CTAB: 150 | part | - | - | - | - | - | - | - |
| | Silica-2 | CTAB: 200 | part | 15 | 15 | - | - | - | - | - |
| | Silica-3 | CTAB: 220 | part | - | - | 15 | - | - | - | - |
| | Silica-4 | CTAB: 230 | part | - | - | - | 15 | 15 | 15 | 15 |
| Total amount (d) of carbon black and silica | | | part | 55 | 55 | 55 | 55 | 55 | 55 | 55 |
| Silica ratio in total amount (d) | | | % | 27.3 | 27.3 | 27.3 | 27.3 | 27.3 | 27.3 | 27.3 |
| Evaluation results | Fracture resistance (index) | | - | 95 | 130 | 125 | 125 | 108 | 103 | 101 |
| | Crack resistance (index) | | - | 95 | 130 | 125 | 125 | 109 | 104 | 101 |
| | Low heat generation property (index) | | - | 135 | 97 | 101 | 101 | 105 | 115 | 121 |

14

It is understood from Tables 2 to 6 that the vulcanized rubber cut out from the tires of Comparative Examples 1 to 13 deteriorated in any of the fracture resistance, crack resistance, and low heat generation property, whereas the vulcanized rubber cut out from the tires of Examples 1 to 22 was excellent in all the fracture resistance, crack resistance, and low heat generation property.

With respect to a group of Examples 1, 4, 14, and 17, a group of Examples 2, 5, 15, and 18, and a group of Examples 3, 6, 16, and 19, in each group of Examples, the silica having the same CTAB specific surface area is used in the same amount, and the Example numbers are shown in such an order that the CATB specific surface area of the carbon black is increased in four stages. Specifically, the particle diameter of the carbon black is reduced in four stages in the order of Example 1, Example 4, Example 14, and Example 17.

In the above Examples, the mass of the carbon black is the same, and the particle diameter of the carbon black is reduced in the order of Example 1, Example 4, Example 14, and Example 17, and therefore, in terms of the number of the particles of carbon black, the amount of the carbon black in the vulcanized rubber in Example 1 is smaller, and the amount of the carbon black in the vulcanized rubber in Example 17 is larger. A similar relationship can be seen in the relationship between the vulcanized rubber in Example 2 and the vulcanized rubber in Example 17, the relationship between the vulcanized rubber in Example 3 and the vulcanized rubber in Example 19, and the like.

Therefore, it is considered that, as the number of the particles of carbon black in the vulcanized rubber is increased, friction is likely to be caused between the particles, so that the low heat generation property tends to become poor, and, meanwhile, the fracture resistance and crack resistance tend to be improved.

The above-mentioned relationship and tendency are considered to apply to the silica.

With respect to a group of Examples 1 to 3, a group of Examples 4 to 6, a group of Examples 14 to 16, and a group of Examples 17 to 19, in each group of Examples, the carbon black having the same CTAB specific surface area is used in the same amount, and the Example numbers are shown in such an order that the CATB specific surface area of the silica is increased in three stages. Specifically, the particle diameter of the silica is reduced in three stages in the order of Example 1, Example 2, and Example 3.

As mentioned above, the mass of the silica is the same, and, on the other hand, the particle diameter of the silica is reduced in the order of Example 1, Example 2, and Example 3, and therefore, in terms of the number of the particles of silica, the amount of the silica in the vulcanized rubber in Example 1 is smaller, and the amount of the silica in the vulcanized rubber in Example 3 is larger.

Therefore, it is considered that, as the number of the particles of silica in the vulcanized rubber is increased, friction is likely to be caused between the particles, so that the low heat generation property tends to become poor, and, meanwhile, the fracture resistance and crack resistance tend to be improved. The reason why the silica is unlikely to affect the properties, as compared to the carbon black, is presumed that the silica naturally has a small particle diameter, and that the amount of the silica contained in the vulcanized rubber is smaller than that of the carbon black.

Industrial Applicability

The use of the rubber composition of the present invention can provide vulcanized rubber excellent in the fracture resistance, crack resistance, and low heat generation property, and therefore tires using the rubber composition of the present invention can be favorably applied to a tire case, a tread member, and the like of various tires for passenger automobiles, light passenger automobiles, light truck, heavy automobiles (such as trucks, buses, and off-the-road tires (e.g., mine vehicles, construction vehicles, and small trucks)), and the like.

**Claims**

1. A rubber composition comprising:

    (A) a rubber component;
    (B) a carbon black having a cetyltrimethylammonium bromide specific surface area of 30 to 110 $m^2$/g; and
    (C) a silica having a cetyltrimethylammonium bromide specific surface area of 200 $m^2$/g or more,
    having a total amount of the carbon black (B) and the silica (C) of 30 to 80 parts by mass per 100 parts by mass of the rubber component (A), and
    having a ratio (b)/(c) of a content (b) of the carbon black (B) and a content (c) of the silica (C) of (70 to 85)/(30 to 15).

2. The rubber composition according to claim 1, wherein the rubber component (A) contains natural rubber.

3. The rubber composition according to claim 1 or 2, wherein the silica (C) has a cetyltrimethylammonium bromide specific surface area of 210 $m^2$/g or more.

4. A tire comprising the rubber composition according to any one of claims 1 to 3.

## INTERNATIONAL SEARCH REPORT

| International application No. |
| --- |
| PCT/JP2018/023673 |

### A. CLASSIFICATION OF SUBJECT MATTER
Int.Cl. C08L21/00(2006.01)i, B60C1/00(2006.01)i, C08K3/04(2006.01)i, C08K3/36(2006.01)i, C08L7/00(2006.01)i

According to International Patent Classification (IPC) or to both national classification and IPC

### B. FIELDS SEARCHED

Minimum documentation searched (classification system followed by classification symbols)
Int.Cl. C08L21/00, B60C1/00, C08K3/04, C08K3/36, C08L7/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-174048 A (SUMITOMO RUBBER INDUSTRIES, LTD.) 08 September 2011, claims 1, 3, paragraphs [0019], [0047], table 1, example 1 & US 2011/0184085 A1, claims 1, 3, paragraphs [0020], [0059], table 1, example 1 | 1, 2, 4<br>3 |
| X<br>A | JP 2015-59181 A (THE YOKOHAMA RUBBER CO., LTD.) 30 March 2015, claims 1, 5, paragraph [0067], table 1, example 7 (Family: none) | 1, 2, 4<br>3 |

☒ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 August 2018 (31.08.2018) | 11 September 2018 (11.09.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/023673

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2014-185340 A (THE YOKOHAMA RUBBER CO., LTD.)<br>02 October 2014, claims 1, 2, 7, paragraphs<br>[0072], [0073], table 1, example 4 (Family: none) | 1, 2, 4<br>3 |
| X<br>A | JP 2011-74332 A (THE YOKOHAMA RUBBER CO., LTD.) 14<br>April 2011, claims 1, 2, paragraph [0029], table<br>1, comparative example 3 (Family: none) | 1, 2, 4<br>3 |
| Y | JP 2013-224391 A (SUMITOMO RUBBER INDUSTRIES,<br>LTD.) 31 October 2013, claim 1, paragraphs [0008],<br>[0053], [0135], table 2 (Family: none) | 3 |
| A | JP 2005-15638 A (THE YOKOHAMA RUBBER CO., LTD.) 20<br>January 2005, paragraph [0030] (Family: none) | 1-4 |
| A | JP 2015-120804 A (SUMITOMO RUBBER INDUSTRIES,<br>LTD.) 02 July 2015, paragraph [0053] (Family:<br>none) | 1-4 |
| A | JP 2012-82323 A (THE YOKOHAMA RUBBER CO., LTD.) 26<br>April 2012, paragraph [0027] (Family: none) | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011174048 A